Europäisches Patentamt

European Patent Office

Office européen des brevets

(19)

(11) Publication number: **0 121 604**
A2

(12) # EUROPEAN PATENT APPLICATION

(21) Application number: **83112904.4**

(22) Date of filing: **21.12.83**

(51) Int. Cl.³: **B 60 C 27/00**

(30) Priority: **21.12.82 GR 70138**

(43) Date of publication of application: **17.10.84**
**Bulletin 84/42**

(84) Designated Contracting States: **BE CH DE FR GB IT LI NL SE**

(71) Applicant: **Polizos, George, Atalanti Lokridos, Fthiotidos (GR)**

(72) Inventor: **Polizos, George, Atalanti Lokridos, Fthiotidos (GR)**

(74) Representative: **Altenburg, Udo, Dipl.-Phys. et al, Patent- und Rechtsanwälte**
**Bardehle-Pagenberg-Dost-Altenburg & Partner**
**Postfach 86 06 20, D-8000 München 86 (DE)**

(54) Anti-sliding security cover.

(57) Simple anti-sliding tyre security cover, the external part of which will bear external projections of several forms, number and dimensions, depending on the type of the vehicle and which will be made of the same or different material from the one of the main cover.

EP 0 121 604 A2

-7-

---

## SPECIFICATION

### of GEORGE Th. POLYZOS

---

### "ANTI-SLIDING SECURITY COVER"

---

## I. SCOPE OF THE INVENTION

The scope of this invention is to offer an anti-sliding tyre security cover, being mainly of a simple fabrication and consisting of a few component parts. Said security cover must also be secure, of cheap fabrication and above all easy-to-handle and be placed.

- 2 -

The anti-sliding security cover is made of a material the elesticity of which is adequate to the safety it offers to the vehicle and the passengers.

The security cover may be placed either on only the motive tyres or, in special cases, on all four tyres of the vehicle so that the security co-efficient to be multiplied. The security cover covers the whole down surface of the tyre which is in contact with the ground as well as part of its sides, being thus fastened on the tyre and preventing the sliding between the cover and the tyre itself in any road condition (snow, ice, mud, wet paved with asphalt road, country-road).

The security cover has internally projections of several forms and sizes in order to prevent the internal sliding between the tyre and the cover itself. Such internal projections will be of an adequate number, dimensions and form to the type of the tyres of the vehicle.

The external part of the security cover will also have projections of several forms, quantities and dimensions, carefully chosen to completely prevent the sliding of the vehicle and attain the safe driving of same, its passengers and its transported goods.

The form, number and dimensions of the projections will be adequate to the vehicle type and the construction

0121604

material will be possibly different from the main cover.

The anti-sliding security cover may be manufactured either  as a whole and undivided product together with its internal and external projections or consisting of several parts (component parts), which will be fit together by using two metal rings 10 milimetres thick, which will have on their edges binders (constrictors) which will fasten the cover against the tyre.  In another way of partial construction, several parts of the cover bearing projecting belts will be fastened against the tyre producing the same as above results against sliding.  In the last two cases of partial manufacturing, the above parts must be reinforced as regards their thickness and the construction material must be less elastic.

## II.   BACKGROUND OF THE INVENTION AND MAIN SPECIFICATIONS

The reason of the present invention, which after multi-year testing is herein described, were (a) the daily vehicle and passengers' accidents,mainly during winter, due to the sliding pavement and (b) the need of finding out an effective way of facing such accidents, so  that to attain their safe transportation even under the most hard weather conditions,

The anti-sliding security cover (hereinbelow called "ASC") is a new and safe invention, which can replace all the until today known methods and relevant inventions, having also the following advantages in comparison to them:

PLACING

The ASC may be placed in a few seconds (70") by using a simple lever. The placing time is particularly emphasized, because the until today anti-sliding inventions need at least 10-20 minutes to be placed in a temperature of $-20^0$ C outside the vehicle. It is a well-known fact that, one of the reasons of accidents caused, due to the use of the known anti-sliding methods, is also the time needed for placing such anti-sliding means on the vehicle tyres. Most of the drivers give the placing of the anti-sliding means up, due to the very low temperature they have to face outside the vehicle. The result is obvious; wounded people or even dead, damages to the vehicle and the transported goods.

REACTIONS

I hereinbelow explain the reaction of security cover as regards the vehicle and mainly its mechanical parts after its placement on the tyre.

The until today inventions relating to anti-sliding, in addition to their time-consuming placing on the vehicle tyres, had also the following difficulties to the vehicle:

a)    The slightest increase of speed was very dangerous, due to the vibrations of the vehicle mechanical parts, the damages on the fenders and generally on the tyres and the whole vehicle.

b)    Due to their elasticity they do not fit and stick to the tyre. This has as a result the loosening of the anti-sliding component parts and their coming through inside the tyre causing thus the vehicle stopping.

On the contrary the ASC,in addition to is speedy placing, it also sticks completely to the tyre, despite the weather conditions. Such fitness is achieved (met) due to its internal projections which slip in the tyre surface in such a safe way that the two parts (the tyre and the cover) are like one and undivided part of the vehicle. The two ASC external projections, chosen for their proper form, number and size, produce such stability and driving steadiness to the vehicle, that the speed increase is a matter of the driver's choice.

MONEY-SAVING

One of the reasons which renders the ASC irresistible, beyond its aforesaid advantages as a safe vehicle component under any weather conditions, is also the money-saving factor.

0121604

It should be noted here,                that the until today inventions relating to anti-sliding are not money-saving at all, considering the damages caused to the vehicle, as abovementioned. On the contrary, ASC is proved to be a money-saving and necessary accessory to any vehicle due to its almost no damage and the safety of completely preventing sliding by using same.

III. DETAILED DESCRIPTION OF THE INVENTION

a) On Drawing Nr. 1 the side ASC surface is depicted as one part together with the projections. On Drawing Nr. 1/A one of the many types of projections is indicatively depicted. Such projection is made either of the same material with the main ASC body or of a different one. The projections' size is adequate to the tyre type and size. On the projections, see Drawing Nr. 1/A, there may also be internally incorporated projections made of a different material as per Drawing Nr. 3/H, in cases of special construction. The size and the distance between the projections will be adequate to ASC construction, namely the bigger the projections' size, the bigger the distance between them. Contrariwise, the smaller distance between the projections, the smaller projections. This is very important for the ASC manufacturing.

On Drawing Nr. 1/B the main ASC body is depicted, which externally is in touch to the ground and internally to the tyre. It will be made of such a material so that to have the necessary elasticity to stick to the elestic part of the tyre and not to move.Its thickness will depend on the elesticity of the material used for its manufacturing (High material elesticity - more thick, low material elasticity - less thick). Moreover, the main body of the cover being in touch to the ground is smooth or bearing small projections as per Drawing Nr. 1/D, depending on the distance between the main projections (Drawing Nr. 1/A). Drawing Nr. 1/C shows the ASC side parts which cover half of the side part of the tyre and bear small projections so that to stick better to it after is placement. Its side parts are thinner than the ASC part touching the ground.

b)  Drawing Nr. 2 shows the front half cut of ASC.Drawing Nr. 2/A shows one of the several types of projections. This projection is made of a different to the external ASC material, but it is not a separate part of same, being one whole with the internal projections, as per Drawing Nr. 2/B, so that the latter to stick into the tyre and form one body with it. Besides, there is no reason for such projections to be of the same material with the main ASC.

On Drawing Nr. 2/b of the front half-cut,it is also depicted the extension of the external projections to the internal part of ASC, so that to stick better to the tyre and prevent the sliding during moving the vehicle. Such internal projections of Drawing 2/B may be of several forms as per Drawing 3/A.B.C.D.E.F. but much smaller, so that to fit to the several types of surfaces of each tyre of the vehicle and to prevent the internal sliding during the vehicle movement, as hereinabove explained.

Drawing 2/C of the half-cut shows the ASC side part being in touch to the tyre and bearing several external projections made of the same material with the main cover, in order to achieve better sticking to the tyre.

Drawing 2/D shows the side cut of the down side where the several materials, which are used for the ASC manufacturing and its internal and external projections, are depicted.

c)  Drawings 3/A.B.C.D.E.F. show indicatively some external projections used for ASC depending on the kind and type of the vehicle. Drawing Nr. 3/H shows the cut of one of the several external projections made of a different material from that of the main part, but incorporated to it.

0121604

IV.   C L A I M S

It is claimed

1)   Simple anti-sliding security cover, as described in
     these presents, the external part of which will bear
     external projections of several forms, number and dimensions, depending on the type of the vehicle and
     which will be made of the same or different material
     from the one of the main cover (App. Nr. 1).

2)   Simple anti-sliding security cover, as described in
     these presents, the internal part of which, in
     addition to the external projections, will also have
     internal projections made of the same or different
     material, in order to fit to the surface of the tyre
     as per Drawings 3/A.B.C.D.E.F.

3)   Anti-sliding security cover manufactured in parts and
     adjusted together either by metal rings ending into
     binders or by projecting belts on the tyre and bearing
     the same as in paras 1 and 2 hereinabove external and
     internal projections.

4)   Forms, dimensions and distances between the projections
     as depicted in the Drawings of these presents.

Athens, December 20, 1982

                        THE INVENTOR